# EUROPEAN PATENT APPLICATION

(11) **EP 4 024 856 A1**
(43) Date of publication of application: **06.07.2022**
(21) Application number: 20859488.7
(22) Date of filing: 29.07.2020
(51) Int. Cl.: H04N 13/395, G02B 27/01, G02B 30/52, G02B 30/54, H04N 13/346, H04N 13/363

(54) **HEAD-UP DISPLAY DEVICE, DISPLAY SYSTEM, AND DISPLAY METHOD**

(30) Priority: 28.08.2019 JP 2019155671
(71) Applicant: KONICA MINOLTA, INC., Tokyo 100-7015 (JP)
(72) Inventor: OIKAWA, Takashi, Tokyo 100-7015 (JP); NAKAMURA, Akihiro, Tokyo 100-7015 (JP); KONDO, Eiichiro, Tokyo 100-7015 (JP); KOJIMA, Toshiyuki, Tokyo 100-7015 (JP); TANNAI, Osamu, Tokyo 100-7015 (JP)
(74) Representative: Gille Hrabal Partnerschaftsgesellschaft mbB Patentanwälte
(86) International application number: PCT/JP2020/029102
(87) International publication number: WO 2021/039257

(57) **Abstract**

To provide a head-up display device, a display system, and a display method that can display video information of stereoscopic video information generated by an external peripheral device of the head-up display device, by depth.

A head-up display device 200 includes an acquisition unit 191, an information conversion unit 192, a display unit 11, a virtual image projection optical system 30, a projection distance change unit 62, and a display determination unit 193. The acquisition unit acquires three-dimensional video information including video information and depth information related to the video information. The information conversion unit converts the three-dimensional video information into two-dimensional images for each depth based on the depth information. The display unit displays the two-dimensional images for each depth. The virtual image projection optical system converts the two-dimensional images displayed by the display unit to a virtual image and performs projection display thereof. The projection distance change unit periodically changes a projection distance of the virtual image from the virtual image projection optical system. The display determination unit controls the display unit such that a two-dimensional image having a depth corresponding to the projection distance is displayed.

## Description

### Technical Field

The present invention relates to a head-up display device, a display system, and a display method.

### Background Art

There is known a head-up display device that stereoscopically displays video by periodically changing a projection distance of a virtual image that is a projection image (for example, Patent Literature 1 below). In the head-up display device, videos having different depths are expressed by projecting virtual images at different projection distances.

The head-up display device of Patent Literature 1 includes an environment monitoring unit that detects an object present in a detection area in a surrounding environment of a vehicle, and three-dimensionally displays related information related to an object based on information of the detected object.

On the other hand, in recent years, various devices (hereinafter, referred to as a "peripheral device") outside the head-up display device, such as a sensor and a camera, have been mounted on a vehicle. Accordingly, it has been studied to display video information generated by a peripheral device on a head-up display in cooperation between the head-up display device and these peripheral devices. However, the head-up display device of Patent Literature 1 does not support the video information generated by the peripheral device, and thus, cannot display the video information. In this way, at present, a technique for transmitting the video information generated by the peripheral device to the head-up display device has not been established.

In relation to this, Patent Literature 2 below discloses, as a technique for transmitting video information captured by a camera, a technique for adding depth information for each pixel or element of a two-dimensional video on a transmission side and generating a stereoscopic video on a reception side based on the two-dimensional video and the depth information.

### Citation List

### Patent Literature

Patent Literature 1: WO 2018/180856 A
Patent Literature 2: JP 2000 -78611 A

### Summary of Invention

### Technical Problem

However, in the technique of Patent Literature 2, since the depth information is given for each pixel or element, two images at the same position and having different depths cannot be expressed as images having different depths on two dimensions. Therefore, there is a problem that the present invention cannot be applied to a head-up display device that projects virtual images at different projection distances.

The present invention has been made in view of the above-described problems. Therefore, an object of the present invention is to provide a head-up display device, a display system, and a display method that can display video information of stereoscopic video information generated by an external peripheral device of the head-up display device, by depth.

### Solution to Problem

The above object of the present invention is achieved by the following means.
(1) A head-up display device including an acquisition unit that acquires three-dimensional video information including video information and depth information related to the video information, an information conversion unit that converts the three-dimensional video information into a two-dimensional image for each depth based on the depth information, a display unit that displays the two-dimensional image for each depth, a virtual image projection optical system that converts the two-dimensional image displayed by the display unit into a virtual image to project and display the virtual image, a projection distance change unit that periodically changes a projection distance of the virtual image from the virtual image projection optical system, and a display determination unit that controls the display unit to display the two-dimensional image having the depth corresponding to the projection distance.
(2) The head-up display device described in the (1), in which the information conversion unit assigns the depth to the video information according to a predetermined order, and converts the three-dimensional video information into two-dimensional image data for each depth.
(3) The head-up display device described in the (2), in which the information conversion unit converts the three-dimensional video information into the two-dimensional image data for each depth by associating each piece of the video information with the depth.
(4) The head-up display device described in the (2), in which the predetermined order is an order of color information included in each pixel of the two-dimensional image according to a predetermined rule, and the information conversion unit assigns the depth to the video information according to an order of the color information, and converts the three-dimensional video information into the two-dimensional image for each depth.
(5) The head-up display device described in the (4), in which the color information is expressed by a bit string, and the information conversion unit assigns the depth to each pixel of the two-dimensional image according to an order of bits of the bit string, and converts the three-dimensional video information into the two-dimensional image for each depth of mono -color by setting a value of a bit corresponding to the depth of the bit string as a pixel value of the two-dimensional image for each depth.
(6) The head-up display device described in any one of the (1) to (5), further including an information holding unit that holds the two-dimensional image for each depth converted by the information conversion unit, in which when a display instruction is received, the display determination unit performs control to display a two-dimensional image designated by the display instruction among the two-dimensional images held in the information holding unit.
(7) The head-up display device described in any one of the (1) to (6), in which the acquisition unit individually acquires the two-dimensional image for each depth.
(8) The head-up display device described in the (7), in which the acquisition unit acquires the two-dimensional image having a different depth at the same timing.
(9) The head-up display device described in any one of the (1) to (8), further including an information storage unit that stores a two-dimensional image generated in advance, in which, when the display instruction is received, the display determination unit controls the display unit to display the two-dimensional image based on the two-dimensional image designated by the display instruction and a position and a depth at which the two-dimensional image is virtually displayed among the two-dimensional images stored in the information storage unit.
(10) The head-up display device described in any one of the (1) to (6), in which the acquisition unit determines a processing cycle of the three-dimensional video information based on the number of stages of the depth of the three-dimensional video information, and performs the reception processing of the three-dimensional video information at the processing cycle.
(11) A display system including a peripheral device that monitors an object in a surrounding environment of a vehicle and outputs a monitoring result as stereoscopic video information, a pre-processing device that converts the stereoscopic video information output from the peripheral device into three-dimensional video information including video information and depth information related to the video information, and the head-up display device according to any one of the (1) to (10) that acquires the three-dimensional video information from the pre-processing device, and stereoscopically displays the video information by displaying a virtual image of the video information at a different projection distance based on the video information and the depth information.
(12) A display method of a head-up display device that stereoscopically displays video information by periodically changing a projection distance of a virtual image from a virtual image projection optical system that projects the virtual image of the video information, the display method including a step (a) of acquiring three-dimensional video information including the video information and depth information related to the video information, a step (b) of converting the three-dimensional video information into a two-dimensional image for each depth based on the depth information, a step (c) of displaying the two-dimensional image having a depth corresponding to the projection distance by a display unit, and a step (d) of converting the two-dimensional image displayed by the display unit into a virtual image and projecting and displaying the virtual image, by the virtual image projection optical system.

### Advantageous Effects of Invention

According to the present invention, three-dimensional video information based on video information generated by a peripheral device is converted into two-dimensional images for each depth based on depth information, and thus, the video information generated by the peripheral device can be displayed for each depth.

### Brief Description of Drawings

Fig. 1A is a conceptual side cross-sectional view illustrating an image display device in a head-up display device according to a first embodiment.
Fig. 1B is a conceptual front view for describing the image display device in the head-up display device according to the first embodiment.
Fig. 2 is an enlarged cross-sectional view illustrating a schematic configuration of the image display device illustrated in Figs. 1A and 1B.
Fig. 3 is a schematic block diagram for describing a configuration of a display system according to the first embodiment.
Fig. 4 is a schematic diagram illustrating three-dimensional video information.
Fig. 5 is a functional block diagram for describing main functions of a main control device illustrated in Fig. 3.
Fig. 6 is a flowchart for describing a processing procedure of a display method of the first embodiment.
Fig. 7 is a schematic diagram for describing a correspondence relationship between video information and depth information of three-dimensional video information in the first embodiment.
Fig. 8 is a schematic diagram for describing a correspondence relationship between video information and depth information of three-dimensional video information in a modified example of the first embodiment.
Fig. 9 is a functional block diagram for describing a main function of a main control device in a second embodiment.
Fig. 10 is a functional block diagram for describing a main function of a main control device in a third embodiment.
Fig. 11 is a schematic diagram illustrating a case where a two-dimensional image stored in an information storage unit is designated and displayed on a display screen.
Fig. 12 is a functional block diagram for describing a main function of a main control device in a fourth embodiment.
Fig. 13 is a graph illustrating a relationship between a transmission frequency and the number of stages of depth of video information when three-dimensional video information is transmitted through a transmission path in a fifth embodiment.

### Description of Embodiments

### (First Embodiment)

Hereinafter, a head-up display device according to a first embodiment of the present invention will be described with reference to the drawings.

### <Image Display Device 100>

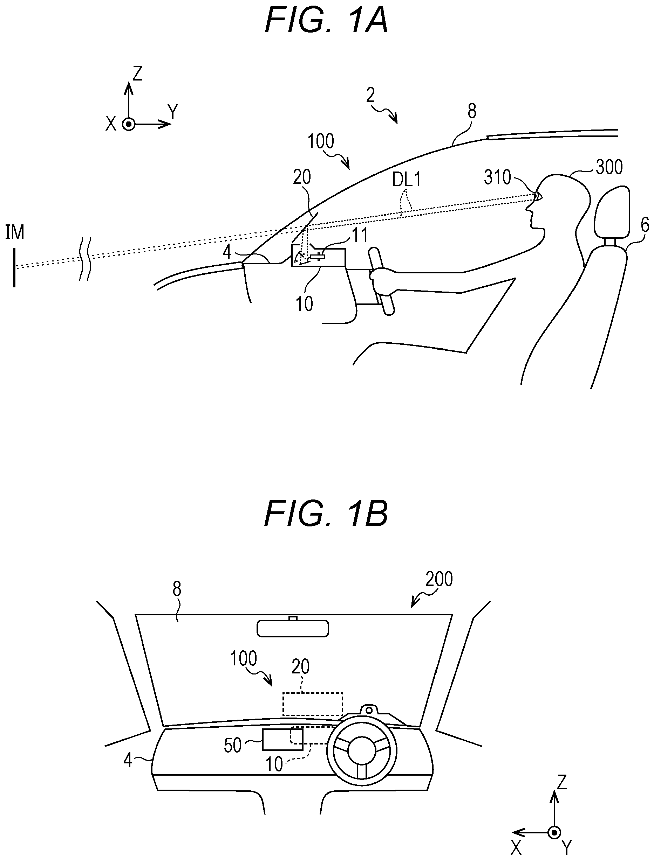

Figs. 1A and 1B are a conceptual side cross-sectional view and a front view for describing an image display device 100 in a head-up display device 200 of the present embodiment. The image display device 100 is mounted in a vehicle 2 of an automobile, for example, and includes a drawing unit 10 and a display screen 20. The image display device 100 virtually displays image information displayed on a display element 11 to be described later in the drawing unit 10 toward a driver 300 via the display screen 20.

The drawing unit 10 of the image display device 100 is installed so as to be embedded in a dashboard 4 of the vehicle 2 and behind the display 50, and emits display light DL1 corresponding to an image including driving-related information and the like toward the display screen 20. The display screen 20 is also called a combiner, and is a concave mirror or a flat mirror having translucency. The display screen 20 is erected on the dashboard 4 by a support of a lower end, and reflects the display light DL1 from the drawing unit 10 toward the rear of the vehicle 2. That is, in the illustrated case, the display screen 20 is an independent type installed separately from the front window 8. The display light DL1 reflected by the display screen 20 is guided to an eye box (not illustrated) corresponding to a pupil 310 of a driver 300 seated in a driver's seat 6 and a peripheral position thereof. The driver 300 can observe the display light DL1 reflected by the display screen 20, that is, a projection image IM as a virtual image in front of the vehicle 2. On the other hand, the driver 300 can observe external light transmitted through the display screen 20, that is, a real image of a front view, an automobile, or the like. As a result, the driver 300 can observe the projection image (virtual image) IM including the related information such as the driving-related information formed by the reflection of the display light DL1 on the display screen 20 in superposition with an external image or a see-through image behind the display screen 20.

Here, the display screen 20 is configured separately from the front window 8, but may be configured for the driver 300 to be able to observe the projection image IM by using the front window 8 as a display screen and performing projection in a display range set in the front window 8 so that. At this time, a reflection area can be secured by changing a reflectance of a partial area of a glass of the front window 8 by coating or the like. In addition, when a reflection angle at the front window 8 is, for example, about 60°, the reflectance is secured to about 15%, and the front window 8 can be used as a reflective surface having transparency even if no coat is particularly provided. In addition to these, the display screen can be provided to be sandwiched in the glass of the front window 8.

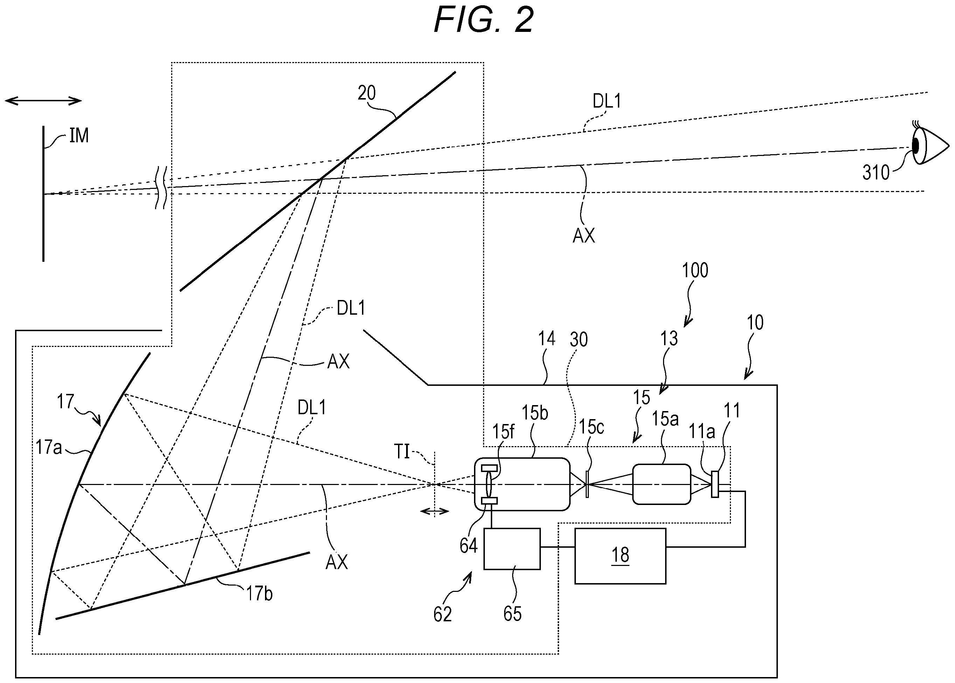

Fig. 2 is an enlarged cross-sectional view illustrating a schematic configuration of the image display device 100 illustrated in Figs. 1A and 1B. The drawing unit 10 includes a main body optical system 13 that is a virtual image type magnifying image forming system including a display element (display unit) 11, a display control unit 18 that operates the main body optical system 13, and a housing 14 that houses the main body optical system 13 and the like. Among them, a combination of the main body optical system 13 and the display screen 20 constitutes a light projection optical system (virtual image projection optical system) 30.

In addition to the display element 11, the main body optical system 13 includes an image forming optical system 15 that forms an intermediate image TI obtained by enlarging an image formed on the display element 11, and a virtual image forming optical system 17 that converts the intermediate image TI into a virtual image.

The display element 11 has a two-dimensional display surface 11a. The image formed on the display surface 11a of the display element 11 is enlarged by a first optical part 15a of the image forming optical system 15 and projected onto a diffusion screen 15c. At this time, by using the display element 11 capable of two-dimensional display, switching of the projection image with respect to the diffusion screen 15c, that is, switching of the projection image IM displayed as a virtual image through the display screen 20 can be performed at a relatively high speed. The display element 11 may be a reflective element such as a digital mirror device (DMD) or a liquid crystal on silicon (LCOS), or may be a transmissive element such as a liquid crystal. In particular, when the DMD or LCOS is used as the display element 11, it is easy to switch an image at a high speed (including high-speed intermittent display) while maintaining brightness, which is advantageous for display in which a virtual image distance or a projection distance is changed. Note that the display element 11 operates at a frame rate of 30 fps or more, more preferably 60 fps or more. As a result, it is possible to make a plurality of projection images (virtual images) IMs appear to be displayed to the driver 300 at the same time at different projection distances. In particular, when the switching of the display is performed at 90 fps or more, the DMD or LCOS is a candidate for the display element 11.

The image forming optical system 15 includes a first optical part 15a with a fixed focus, a diffusion screen 15c, and a second optical part 15b with a variable focus. The first optical part 15a enlarges and projects an image formed on the display surface 11a of the display element 11 onto the diffusion screen 15c, and the second optical part 15b enlarges and projects the image projected onto the diffusion screen 15c again to form the intermediate image TI (intermediate image TI itself is premised on a display operation of the display element 11.). As the diffusion screen 15c, for example, frosted glass, a lens diffusion plate, a microlens array, or the like can be used. The second optical part 15b includes a movable lens 15f as an optical element. The movable lens 15f is movable in an optical axis AX direction by the arrangement change device 62 to be described later, a focal length of the second optical part 15b increases or decreases with the movement of the movable lens (optical element) 15f in the optical axis AX direction, and a position of the intermediate image TI (when the display of the display element 11 is not operated, the intermediate image as the display is not necessarily formed, but a position where the intermediate image will be formed is also referred to as a position of the intermediate image) as the image formation or focus position can also be moved in the optical axis AX direction. Although depending on the lens configuration of the second optical part 15b and the like, for example, by moving the movable lens 15f to the virtual image forming optical system 17 side, the position of the intermediate image TI moves to the virtual image forming optical system 17 side, so the virtual image distance to the projection image IM can be reduced. In addition, by moving the movable lens 15f to the display element 11 side, the position of the intermediate image TI moves to the display element 11 side, so the virtual image distance to the projection image IM can be increased.

The virtual image forming optical system 17 magnifies the intermediate image TI formed by the image forming optical system 15 in cooperation with the display screen 20, and forms the projection image IM as a virtual image in front of the driver 300. The virtual image forming optical system 17 includes at least one mirror, but includes two mirrors 17a and 17b in the illustrated example.

The arrangement change device 62 provided accompanying the movable lens 15f is a projection distance change unit that moves the movable lens 15f or the intermediate image TI to desired positions along the optical axis AX, and periodically changes the projection distance from the light projection optical system 30 to the projection image IM as the virtual image. The arrangement change device 62 includes a movable mechanism 64 that enables the movement of the movable lens 15f in the optical axis AX direction, and a drive unit 65 that reciprocates the movable lens 15f in the optical axis AX direction at a desired speed via the movable mechanism 64. When, for example, a motor is used as the drive unit 65, it is preferable to incorporate a spring that facilitates the reciprocation or vibration of the movable lens 15f in the movable mechanism 64 in order to reduce a load applied to the motor. By moving the movable lens 15f along the optical axis AX by the arrangement change device 62, the distance between the projection image IM as the virtual image formed behind the display screen 20 by the virtual image forming optical system 17 and the driver 300 as an observer can be increased or decreased. In this way, by changing the position of the projection image IM to be projected back and forth and setting the display content according to the position, the display content of the projection image IM is changed while changing the virtual image distance to the projection image IM, and the projection image IM as a series of projection images can be made three-dimensional.

The moving speed of the movable lens 15f is preferably a speed at which the projection image IM as the virtual image can be shown as if the projection image IM is simultaneously displayed at a plurality of locations or a plurality of virtual image distances. For example, when the display element 11 performs display at 90 fps on the assumption that the projection image IM is sequentially projected in three stages of a long distance, a middle distance, and a short distance, the display of the projection image IM at each distance (for example, a long distance) is switched at 30 fps, and the projection images IM at the middle distance and the short distance are performed in parallel and are recognized as continuous switching. The moving speed of the movable lens 15f at this time is set to be synchronized with the display operation of the display element 11. The moving speed of the movable lens 15f needs to correspond to 30 fps or more which is an operation speed of the display element 11, and it is possible to have a structure in which, for example, a wheel in which a large number of lenses are arranged on a circumference is rotated around a central axis parallel to the optical axis AX, and the large number of lenses are sequentially arranged on the optical axis AX, in addition to using a spring mechanism, thereby switching the large number of lenses at a high speed.

In the case of the light projection optical system 30 illustrated in Fig. 2, even if the magnification of the relay optical system increases to increase an observable range (that is, an eye box) when eyes of the driver 300 as an observer move and a size of the diffusion screen 15c increases, there is an advantage that it is not necessary to move the diffusion screen 15c and that the movement mechanism does not become large.

### <Display System 1>

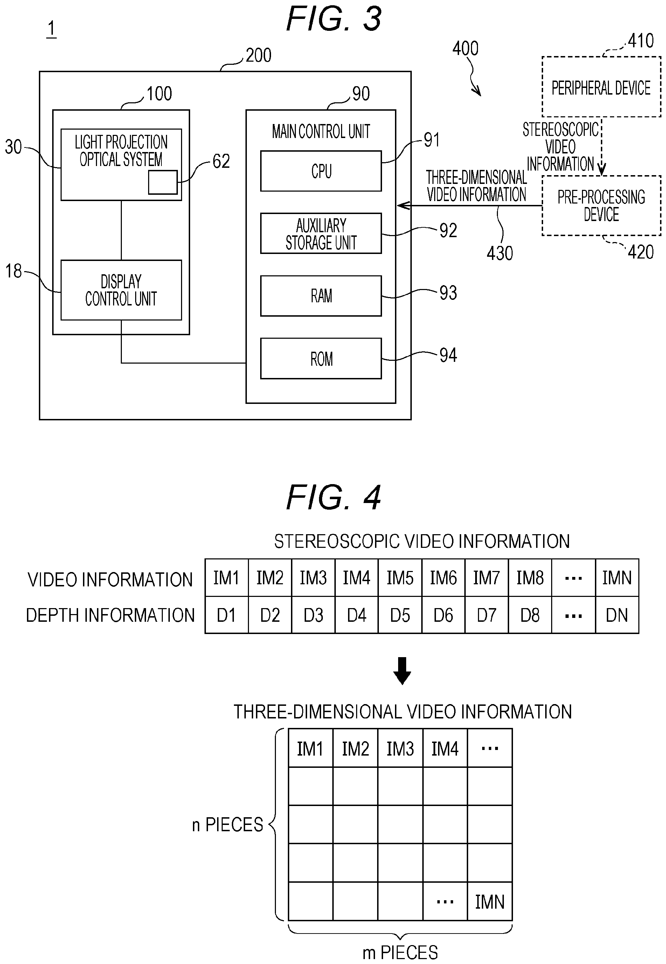

Fig. 3 is a schematic block diagram for explaining a configuration of the display system of the present embodiment, and Fig. 4 is a schematic diagram illustrating three-dimensional video information. As illustrated in Fig. 3, the display system 1 includes a head-up display device 200 and an external device 400. Hereinafter, for convenience of description, the external device 400 will be described, and then the head-up display device 200 will be described.

### <External Device 400>

The external device 400 includes a peripheral device 410 and a pre-processing device 420. The peripheral device 410 monitors an object in the surrounding environment of the vehicle 2, converts the monitoring result into a video, and outputs the video as stereoscopic video information. The stereoscopic video information is, for example, video information including an image for a left eye and an image for a right eye having parallax.

The peripheral device 410 may include, for example, at least one of a monitoring device such as a camera, a radar, and laser imaging detection and ranging (LIDER).

The camera is, for example, a stereo camera, and includes two imaging units, and these imaging units are arranged on an interior side of an upper portion of the front window 8 of the vehicle 2 so as to reproduce parallax of both eyes. The stereo camera captures the outside of the vehicle 2 to acquire a video, and outputs the acquired video as visualized stereoscopic video information.

The radar transmits, for example, a millimeter wave radio wave from the vehicle 2 to the surroundings, receives the radio wave reflected by the object, detects the object around the vehicle 2, and outputs the detected object as imaged stereoscopic video information.

The LIDER irradiates a laser beam from the vehicle 2 toward the surroundings in a pulse shape, receives the light reflected by the object to measure a distance to a reflection point, detects the object, and outputs the detected object as imaged stereoscopic video information.

The pre-processing device 420 converts the stereoscopic video information generated by the peripheral device 410 into a form of information (in the present specification, it is referred to as "three-dimensional video information") that can be handled by the head-up display device 200. The three-dimensional video information is generated based on the stereoscopic video information, and includes video information and depth information related to the video information. The video information and the depth information of the three-dimensional video information of the present embodiment are associated with each other in a form capable of holding a correspondence relationship therebetween.

For example, as illustrated in Fig. 4, the stereoscopic video information including video information of IM1 to IMN and depth information D1 to DN corresponding to each piece of video information is assumed. The video information IM1 to IMN may be, for example, two-dimensional images having vertical and horizontal sizes of about 100 pixels. The depth information D1 to DN may be values (unit: meters) of depths of each of the video information IM1 to IMN

In the present embodiment, the pre-processing device 420 converts general stereoscopic video information into specific three-dimensional video information used in the present embodiment based on a unique predetermined rule predefined. For example, the pre-processing device 420 converts the video information IM1 to IMN of the stereoscopic video information into three-dimensional video information in a matrix format of n pieces in a vertical direction × m pieces in a horizontal direction, and outputs the three-dimensional video information to the head-up display device 200. A transmission path 430 for transmitting the three-dimensional video information is arranged between the pre-processing device 420 and the head-up display device 200 (see Fig. 3).

In addition, the video information IM1 to IMN of the three-dimensional video information in the matrix format are associated with the depth information D1 to DN in a predetermined order according to a predetermined rule. The predetermined order is, for example, the order of D1, D2, D3,..., DN -1, and DN. The depth information D1 to DN may be, for example, depths of 5 to N [m], respectively.

Therefore, the pre-processing device 420 can collectively transmit the video information IM1 to IMN having the depths of 5 to N [m] to the head-up display device 200 as one piece of large video information by generating the three-dimensional video information in the matrix format.

As described above, in the three-dimensional video information, since the video information IM1 to IMN are associated with the depth information D1 to DN in a predetermined order, it is not necessary to transmit the depth information by converting the video information IM1 to IMN into the three-dimensional video information in the matrix format and transmitting the three-dimensional video information. Therefore, the transmission efficiency of the three-dimensional video information can be improved. As described later, the main control device 90 of the head-up display device 200 extracts the video information of the three-dimensional video information based on the vertical and horizontal sizes of the video information IM1 to IMN, and associates the depth with the video information in a predetermined order.

Note that the depth information may be separately transmitted from the pre-processing device 420 to the main control device 90.

### <Head-up Display Device 200>

As illustrated in Fig. 3, the head-up display device 200 includes the image display device 100 as a part thereof. The image display device 100 has the structure illustrated in Fig. 2 as described above, and the description thereof will be omitted here. The head-up display device 200 includes the main control device 90 in addition to the image display device 100.

The main control device 90 is a computer including a central processing unit (CPU) 91, an auxiliary storage unit 92, a random access memory (RAM) 93, and a read only memory (ROM) 94. The main control device 90 controls the operation of the head-up display device 200 by software processing.

The CPU 91 executes the program developed in the RAM 93 and controls the operation of the head-up display device 200. The program is stored in advance in the auxiliary storage unit 92 or the ROM 94.

The auxiliary storage unit 92 includes, for example, a hard disk drive (HDD), a solid state drive (SSD), a flash memory, and the like, and stores various programs including a display program.

The RAM 93 stores received data, data temporarily generated by processing of the CPU 91, and the like. The ROM 94 stores programs executed by the CPU 91, parameters, data, and the like.

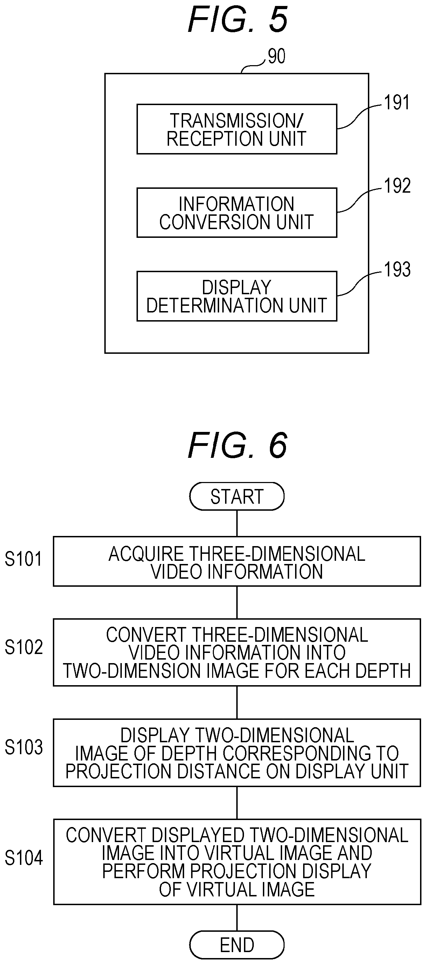

The CPU 91 realizes various functions by executing the display program. Fig. 5 is a functional block diagram for describing main functions of the main control device 90 illustrated in Fig. 3. The main control device 90 includes a transmission/reception unit 191, an information conversion unit 192, and a display determination unit 193.

The transmission/reception unit 191 operates as an acquisition unit, and transmits and receives data including three-dimensional video information to and from the external device 400. The information conversion unit 192 converts the three-dimensional video information into two -dimensional images for each depth based on the depth information. The display determination unit 193 appropriately operates the arrangement change device 62 via the display control unit 18, for example. In addition, the display determination unit 193 controls the display of the two-dimensional image by the display element 11 according to the projection distance

### <Display Method>

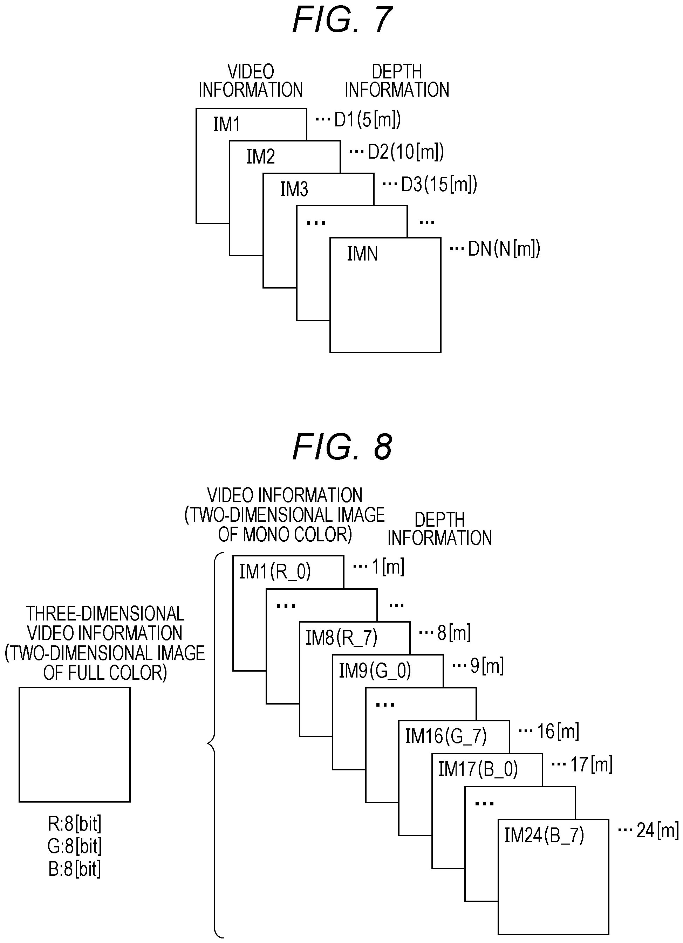

Fig. 6 is a flowchart for describing a processing procedure of a display method of a head-up display device 200 in the present embodiment, and Fig. 7 is a schematic diagram for describing a correspondence relationship between video information and depth information in three-dimensional video information.

First, the three-dimensional video information is acquired (step S101). The transmission/reception unit 191 acquires the three-dimensional video information in a matrix format illustrated in Fig. 4, for example, from the pre-processing device 420.

Next, the three-dimensional video information is converted into the two-dimensional images for each depth (step S102). The information conversion unit 192 converts the three-dimensional video information into two-dimensional images for each depth based on the depth information. More specifically, as illustrated in Fig. 7, the information conversion unit 192 converts the three-dimensional video information into two-dimensional image data for each depth by associating each two-dimensional image included in the three-dimensional video information with a depth in a predetermined order.

Note that the predetermined order according to the predetermined rule may be determined in advance between the pre-processing device 420 and the main control device 90, or may be transmitted from one to the other via the transmission/reception unit 191.

Next, a two-dimensional image having a depth corresponding to a projection distance is displayed by a display element 11 (step S103). The display control unit 18 periodically changes the projection distance of the virtual image which is the projection image IM by the light projection optical system 30 by appropriately operating the arrangement change device 62. That is, the display control unit 18 periodically changes the projection position in the depth direction of the virtual image that is the projection image IM. In a case where the projection position corresponds to the depth of the two-dimensional images for each depth, the display determination unit 193 determines that the corresponding two-dimensional image should be displayed, and transmits the two-dimensional image to the display control unit 18.

Next, the displayed two-dimensional image is converted into a virtual image and projected and displayed (step S104). The light projection optical system 30 converts the two-dimensional image displayed by the display element 11 into the virtual image, and projects and displays the virtual image.

As described above, in the processing illustrated in the flowchart of Fig. 6, the head-up display device 200 acquires the three-dimensional video information, and converts the acquired three-dimensional video information into the two-dimensional images for each depth based on the depth information. Subsequently, while the projection distance of the virtual image from the virtual image projection optical system is periodically changed, the two-dimensional image having the depth corresponding to the projection distance is displayed by the display element 11. Then, the two-dimensional image displayed by the display element 11 is converted into the virtual image and projected and displayed.

### (Modified Example)

Fig. 8 is a schematic diagram for describing a correspondence relationship between video information and depth information of three-dimensional video information in a modified example of the first embodiment. In the present modified example, as another example of a predetermined rule, a pre-processing device 420 assigns a depth according to an order of color information. More specifically, as illustrated in Fig. 8, the depth of the three-dimensional video information is assigned according to the order of the color information (R: 8 [bit], G: 8 [bit], B: 8 [bit]) of each pixel of the two-dimensional image. For example, 1 [m] is assigned to bit 0 (R_0) of R, and 2 [m] is assigned to bit 1 (R_1) of R. Similarly, 8 [m] is assigned to bit 7 (R_7) of R, 9 [m] is assigned to bit 0 (G_0) of G, and a depth is similarly assigned to the other bits.

Therefore, the pre-processing device 420 can collectively transmit video information IM1 to IM 24 each having a depth of 1 ~ 24 [m] to the head-up display device 200 by multiplexing the video information (two-dimensional image of mono-color) for each depth to generate the three-dimensional video information.

As described above, in the three-dimensional video information of the present modified example, since the video information IM1 to IM 24 are associated with the depth information (1 to 24 [m], respectively) in a predetermined order, it is not necessary to transmit the depth information by multiplexing the video information IM1 to IM 24 to generate the three-dimensional video information. Therefore, the transmission efficiency of the three-dimensional video information can be improved.

On the head-up display device 200 side, the information conversion unit 192 converts the three-dimensional video information into the two-dimensional images for each depth. More specifically, the information conversion unit 192 assigns a depth to a full-color two-dimensional image included in the three-dimensional video information received by the transmission/reception unit 191 according to an order of bit strings of color information (RGB), and generates a two-dimensional image in which each pixel is represented by a 1-bit value of an RGB bit string. For example, the information conversion unit 192 generates the video information IM1 in which each pixel is represented by R_0. Similarly, the video information IM2 to IM24 is generated for R_1 to R_7, G 0 to G_7, and B_0 to B_7, respectively. In this way, usually, by setting a bit value (24 bit information) of the color information of each pixel in one full-color two-dimensional image to a pixel value (1 bit information) of 24 two-dimensional images for each depth, two-dimensional images for each depth is generated.

Note that a table describing the relationship between the order of the video information and the depth information may be separately prepared, and the three-dimensional video information may be converted into the two-dimensional images for each depth with reference to this table.

In addition, the present modified example is not limited to a case where all 24 bits of RGB are used for the depth as in the above-described example. For example, out of 24 bits, one part (for example, 16 bits) may be assigned for the depth and the other part (for example, 8 bits) may be assigned for color information (or gradation representation). In this case, since 16 bits are assigned for the depth, the number of stages of the depth is 16.

Furthermore, in the above example, the case where the value of the depth is assigned so that an interval of the depth is evenly spaced by 1 [m] has been described, but the depth may not be assigned at equal intervals. For example, the depth may be assigned such that the interval is narrow for a short distance requiring a high resolution and the interval is wide for a long distance sufficient for a low resolution.

According to the head-up display device 200 of the present embodiment described above, the three-dimensional video information based on the video information generated by the peripheral device 410 is converted into the two-dimensional images for each depth based on the depth information, so the video information generated by the peripheral device 410 can be displayed for each depth.

### (Second Embodiment)

In the first embodiment, the case where three-dimensional video information acquired from pre-processing device 420 is converted into the two-dimensional images for each depth by information conversion unit 192 and displayed in real time has been described. In a second embodiment, a case where the two-dimensional images for each depth converted by an information conversion unit 192 are held and read and displayed at an arbitrary timing will be described.

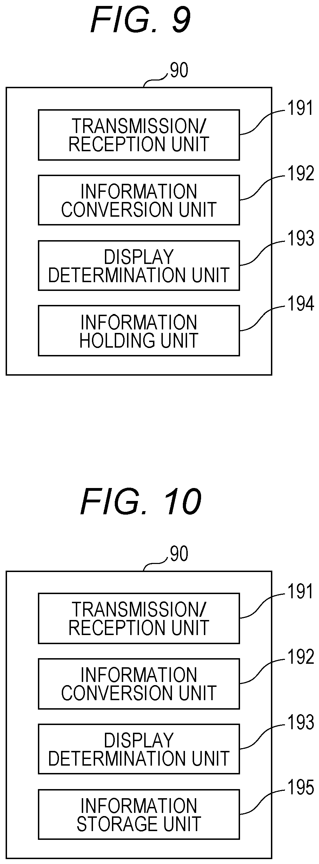

Fig. 9 is a functional block diagram for describing a main function of a main control device 90 in a second embodiment. Note that, in order to avoid duplication of description, description of the same configuration as that of the first embodiment is omitted.

The main control device 90 further includes an information holding unit 194 in addition to the transmission/reception unit 191, the information conversion unit 192, and the display determination unit 193. The information holding unit 194 holds the two-dimensional images for each depth converted by the information conversion unit 192 and its position information (XY coordinates) on the display screen 20. When receiving a display instruction, the display determination unit 193 reads the two-dimensional image having the designated depth from the information holding unit 194 and transmits the read two-dimensional image to the display control unit 18. A plurality of depths can be designated. In this case, the display determination unit 193 sequentially transmits two-dimensional images having a plurality of depths from the information holding unit 194 to the display control unit 18. In the present embodiment, the head-up display device 200 can display video information having an arbitrary depth at an arbitrary timing by holding the two-dimensional images for each depth in the information holding unit 194 in advance.

### (Third Embodiment)

In the first and second embodiments, the case of displaying the two-dimensional images for each depth converted based on the three-dimensional video information acquired from the pre-processing device 420 has been described. In a third embodiment, a case where a two-dimensional image stored in advance is read, and a depth is designated and displayed will be described.

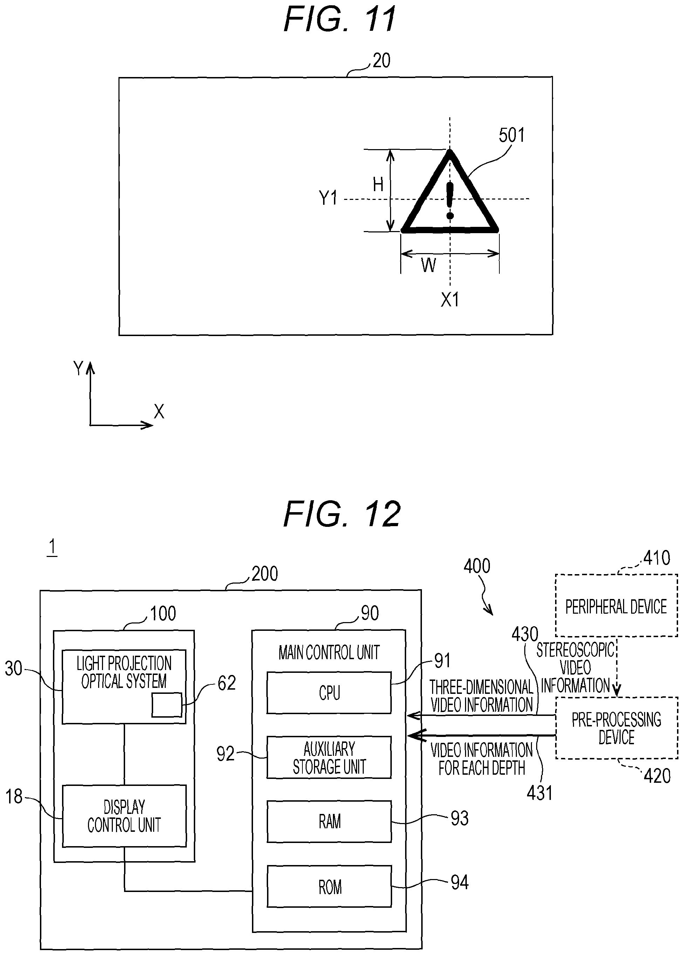

Fig. 10 is a functional block diagram for describing a main function of a main control device 90 in the third embodiment, and Fig. 11 is a schematic diagram illustrating a case where a two-dimensional image stored in an information storage unit 195 is designated and displayed on a display screen 20. Note that, in order to avoid duplication of description, description of the same configuration as that of the first embodiment is omitted.

The main control device 90 further includes an information storage unit 195 in addition to the transmission/reception unit 191, the information conversion unit 192, and the display determination unit 193. The information storage unit 195 is realized by an auxiliary storage unit 92. A two-dimensional image to be displayed on the display screen 20 is stored in the information storage unit 195 in advance.

The display determination unit 193 receives a display instruction including a two-dimensional image to be displayed, and a position (X coordinate and Y coordinate), a depth, and a size (width and height) at which the two-dimensional image is displayed. When receiving the display instruction, the display determination unit 193 reads the two-dimensional image to be displayed from the information holding unit 194 and transmits the read two-dimensional image to the display control unit 18. The display instruction can be configured to be output by the CPU 91 at a cycle or timing stored in advance in the auxiliary storage unit 92, for example.

Note that a plurality of depths can be designated. In this case, the display determination unit 193 sequentially transmits two-dimensional images having a plurality of depths from the information storage unit 195 to the display control unit 18.

In addition, the two-dimensional image in the information storage unit 195 can be updated with two-dimensional images for each depth converted based on the three-dimensional video information acquired from the pre-processing device 420.

As illustrated in Fig. 11, for example, two-dimensional image 501 is displayed on the display screen 20 at a designated position (X1 and Y1), a depth, and a size (width W and height H).

As described above, the head-up display device 200 stores the two-dimensional image in information storage unit 195 in advance, and designates the two-dimensional image to be displayed and the position, depth, and size of the two-dimensional image to be displayed, thereby displaying the video information having an arbitrary depth at an arbitrary timing.

### (Fourth Embodiment)

In a fourth embodiment, a case where a transmission path for transmitting video information for each depth from a pre-processing device 420 to a head-up display device 200 is further provided will be described.

Fig. 12 is a functional block diagram for describing a main function of a main control device 90 in a fourth embodiment. Note that, in order to avoid duplication of description, description of the same configuration as that of the first embodiment is omitted.

In the present embodiment, a display system 1 includes a transmission path 431 for transmitting video information for each depth in addition to a transmission path 430 for transmitting three-dimensional video information from the pre-processing device 420 to the head-up display device 200. The transmission path 431 may include the number of transmission channels (signal lines) corresponding to the number of stages of a depth of video information.

The transmission/reception unit 191 individually receives the video information for each depth from the pre-processing device 420 through transmission channels different for each depth.

As described above, when the video information is transmitted from the pre-processing device 420 to the head-up display device 200, the transmission/reception unit 191 can receive video information having different depths at a time, so a transmission time can be shortened.

### (Fifth Embodiment)

In a fifth embodiment, a case where a transmission frequency when three-dimensional video information is transmitted from a pre-processing device 420 to a head-up display device 200 through a transmission path 430 is variable will be described.

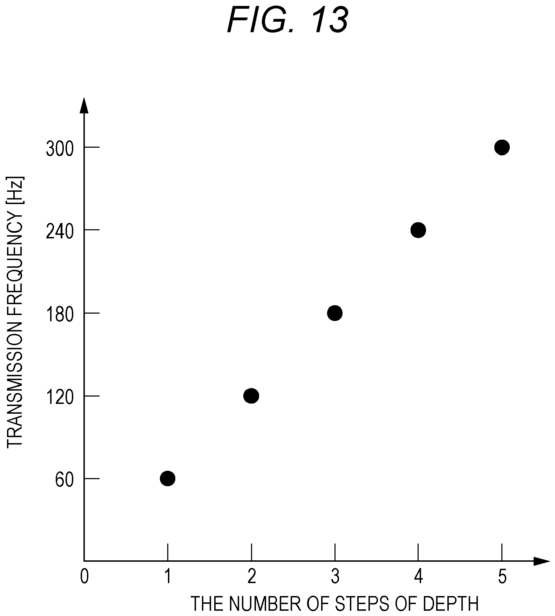

Fig. 13 is a graph illustrating a relationship between a transmission frequency and the number of stages of a depth of video information when three-dimensional video information is transmitted through transmission path 430. Note that, in order to avoid duplication of description, description of the same configuration as that of the first embodiment is omitted.

The transmission/reception unit 191 acquires the number of stages of the depth based on the depth information of the three-dimensional video information. Then, the transmission/reception unit 191 determines a processing frequency (processing cycle) of the three-dimensional video information based on the number of stages of the depth, and performs reception processing of the three-dimensional video information at a frequency corresponding to the processing frequency.

For example, it is assumed that a display frequency of the video information is 60 [Hz]. As illustrated in Fig. 13, the transmission frequency can be obtained by the number of stages of 60 [Hz] × depth. Therefore, in the example illustrated in Fig. 13, in a case where the number of stages of the depth is 4, the transmission frequency is 60 [Hz] × 4 = 240 [Hz]. In this case, the pre-processing device 420 on the transmission side transmits the three-dimensional video information at 240 [Hz], and the transmission/reception unit 191 receives the three-dimensional video information at 240 [Hz].

As described above, in the present embodiment, since the transmission frequency at the time of transmitting the three-dimensional video information is variable, even in a case where the number of stages of the depth increases, the transmission frequency increases, so the increase in the transmission time can be avoided.

The present invention is not limited to the above-described embodiments, and various modifications can be made within the scope of claims.

For example, the means and method for performing various types of processing in the head-up display device 200 according to the above-described embodiment can be realized by either a dedicated hardware circuit or a programmed computer. The program may be provided by, for example, a computer-readable recording medium such as a compact disc read only memory (CD-ROM), or may be provided online via a network such as the Internet. In this case, the program recorded in the computer-readable recording medium is usually transmitted to and stored in a storage unit such as a hard disk. In addition, the program may be provided as independent application software, or may be incorporated in software of the head-up display device 200 as one function of the head-up display device 200.

The present application is based on Japanese Patent Application No. 2019-155671 filed on August 28, 2019, the disclosure of which is incorporated by reference in its entirety.

### Reference Signs List

- 1: Display system
- 2: Vehicle
- 6: Driving seat
- 8: Front window
- 10: Drawing unit
- 11: Display element
- 11a: Display surface
- 13: Main body optical system
- 14: Housing
- 15: Image forming optical system
- 15a: First optical part
- 15b: Second optical part
- 15c: Diffuse screen
- 15f: Movable lens
- 17: Virtual image formation optical system
- 17a, 17b: Mirror
- 18: Display control unit
- 20: Display screen
- 30: Projection optical system
- 50: Display
- 62: Arrangement change device
- 65: Drive unit
- 90: Main control device
- 91: CPU
- 92: Auxiliary storage unit
- 93: RAM
- 94: ROM
- 100: Image display device
- 191: Transmission/reception unit
- 192: Information conversion unit
- 193: Display determination unit
- 194: Information holding unit
- 195: Information storage unit
- 200: Head-up display device
- 400: External device
- 410: Peripheral device
- 420: Pre-processing device
- 430, 431: Transmission path

## Claims

1. A head-up display device, comprising:
an acquisition unit that acquires three-dimensional video information including video information and depth information related to the video information;
an information conversion unit that converts the three-dimensional video information into a two-dimensional image for each depth based on the depth information;
a display unit that displays the two-dimensional image for each depth;
a virtual image projection optical system that converts the two-dimensional image displayed by the display unit into a virtual image to project and display the virtual image;
a projection distance change unit that periodically changes a projection distance of the virtual image from the virtual image projection optical system; and
a display determination unit that controls the display unit to display the two-dimensional image having the depth corresponding to the projection distance.

2. The head-up display device according to claim 1, wherein
the information conversion unit
assigns the depth to the video information according to a predetermined order, and converts the three-dimensional video information into two-dimensional image data for each depth.

3. The head-up display device according to claim 2, wherein
the information conversion unit
converts the three-dimensional video information into the two-dimensional image data for each depth by associating each piece of the video information with the depth.

4. The head-up display device according to claim 2, wherein
the predetermined order is an order of color information included in each pixel of the two -dimensional image according to a predetermined rule, and
the information conversion unit
assigns the depth to the video information according to an order of the color information, and converts the three-dimensional video information into the two-dimensional image for each depth.

5. The head-up display device according to claim 4, wherein
the color information is expressed by a bit string, and
the information conversion unit
assigns the depth to each pixel of the two-dimensional image according to an order of bits of the bit string, and converts the three-dimensional video information into the two-dimensional image for each depth of mono-color by setting a value of a bit corresponding to the depth of the bit string as a pixel value of the two - dimensional image for each depth.

6. The head-up display device according to any one of claims 1 to 5, further comprising:
an information holding unit that holds the two-dimensional image for each depth converted by the information conversion unit, wherein
when a display instruction is received, the display determination unit performs control to display a two-dimensional image designated by the display instruction among the two-dimensional images held in the information holding unit.

7. The head-up display device according to any one of claims 1 to 6, wherein
the acquisition unit
individually acquires the two-dimensional image for each depth.

8. The head-up display device according to claim 7, wherein
the acquisition unit
acquires the two-dimensional image having a different depth at the same timing.

9. The head-up display device according to any one of claims 1 to 8, further comprising:
an information storage unit that stores a two-dimensional image generated in advance, wherein
when the display instruction is received, the display determination unit controls the display unit to display the two-dimensional image based on the two-dimensional image designated by the display instruction and a position and a depth at which the two-dimensional image is virtually displayed among the two-dimensional images stored in the information storage unit.

10. The head-up display device according to any one of claims 1 to 6, wherein
the acquisition unit
determines a processing cycle of the three-dimensional video information based on the number of stages of the depth of the three-dimensional video information, and performs the reception processing of the three-dimensional video information at the processing cycle.

11. A display system, comprising:
a peripheral device that monitors an object in a surrounding environment of a vehicle and outputs a monitoring result as stereoscopic video information;
a pre-processing device that converts the stereoscopic video information output from the peripheral device into three-dimensional video information including video information and depth information related to the video information; and
the head-up display device according to any one of claims 1 to 10 that acquires the three-dimensional video information from the pre-processing device, and stereoscopically displays the video information by displaying a virtual image of the video information at a different projection distance based on the video information and the depth information.

12. A display method of a head-up display device that stereoscopically displays video information by periodically changing a projection distance of a virtual image from a virtual image projection optical system that projects the virtual image of the video information, the display method comprising:
a step (a) of acquiring three-dimensional video information including the video information and depth information related to the video information;
a step (b) of converting the three-dimensional video information into a two-dimensional image for each depth based on the depth information;
a step (c) of displaying the two-dimensional image having a depth corresponding to the projection distance by a display unit; and
a step (d) of converting the two-dimensional image displayed by the display unit into a virtual image and projecting and displaying the virtual image, by the virtual image projection optical system.
